(19) **Europäisches Patentamt**

**European Patent Office**

**Office européen des brevets**

(11) **EP 1 693 312 A1**

(12) **EUROPEAN PATENT APPLICATION**

(43) Date of publication:
23.08.2006 Bulletin 2006/34

(51) Int Cl.:
*B65D 65/40* (2006.01) *B29C 45/17* (2006.01)
*B32B 15/08* (2006.01)

(21) Application number: 05003508.8

(22) Date of filing: 18.02.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Amcor Limited**
**Abbotsford,**
**Victoria 3067 (AU)**

(72) Inventors:
• **Krikor, Hilde**
**2100 Deume (BE)**
• **Van Brempt, Veerle**
**2930 Brasschat (BE)**

(74) Representative: **Matkowska, Franck**
**Matkowska & Associés**
**10, avenue de la Créativité**
**59650 Villeneuve d'Ascq (FR)**

(54) **Bag for storing preforms**

(57)    The bag (a) is made from a laminate comprising at least one metallic layer and/or (b) the water vapour transmission of the wall of the bag is less than 7 g/m². 24h, and preferably less than 0.1 g/m².24h.

The bag is specifically used for storing preforms and more especially polyamide-containing preforms (monolayer or multilayer preforms), and enables to reduce the haze formation in bottles obtained by biaxially stretching the preforms in a mould after storage of the preforms in the said bag.

**Description**

**Technical Field**

The present invention relates to the field of thermoplastic preforms used for making rigid plastic containers, and more especially to the field of preforms comprising polyamide. The invention mainly deals with the problem of haze formation in containers made by biaxially stretching plastic preforms in a mould, especially polyamide-containing preforms.

**Prior Art**

Thermoplastic preforms are widely used in the packaging industry for making various hollow and rigid plastic containers (bottles or the like). In a first step, the preform (intermediary product) is injected in a mould. Then in a second step, the rigid container is produced by biaxially stretching the preform in a mould, in particular by using the well-known stretch-blow moulding technique. Said process of making biaxially stretched rigid plastic containers can be either a single-stage process or a two-stage process.

In the two-stage process, the injection step and the stretch-blow moulding step are not performed immediately in line one after the other, and can even be performed on different production sites that are remote from each other. In the two-stage process, it is thus necessary to temporarily store the preforms until they are taken to the blowing machine.

Most of the time, the preforms are stored in bulk in storage containers, usually carton containers closed by removable lids. For example, PCT application WO-A-01 54 987 is disclosing a process for automatically storing preforms in bulk in a storage container.

It is also known to use flexible bags for storing preforms in bulk, said flexible bags being put in transport containers such as carton containers or metal cages. A bag that is usually used for storing preforms in bulk is a cheap and monolayer bag made of polyethylene and having a wall thickness of approximately $30\mu m$.

A thermoplastic resin that is widely used for making rigid stretch-blow moulded containers is polyethylene terephthalate (PET). This material has a number of valuable properties for packaging, but lacks sufficient gas barrier properties for many applications. In particular because of its oxygen permeability, PET alone is not appropriate for packaging oxygen-sensitive food and beverage products such as beer, fruit juices, some carbonated soft drinks, etc... PET is also permeable to carbon dioxide, which in turn leads to a short shelf life for carbonated products, such as carbonated soft drinks, stored in PET containers.

In order to improve the gas barrier properties of rigid plastic containers, in particular oxygen and/or carbon dioxide barrier properties, it is now common to use multilayered preforms that include at least one gas barrier layer. For example, in the field of bottle packaging, a typical and common multilayered wall structure for a preform is a three-layer wall: two internal and external layers made of PET, and one intermediate gas barrier layer sandwiched between the two PET layers.

A first known type of barrier layer is made of, or comprises, polymers that have excellent gas-barrier properties, in particular to $O_2$ and/or $CO_2$, and is generally referred as "passive barrier layer". Among the polymers used for making passive barrier layers, homo- or copolymers of polyamides are commonly used. Among these polyamides, the so-called "MXD6" or "MXD6 nylon" (specific polyamide material manufactured by Mitsubishi Gas Chemical Company, Japan) is preferably used, i.e. a poly(m-xylyleneadipamide) produced by the polycondensation of a diamine component composed mainly of m-xylylenediamine and a dicarboxylic acid component composed mainly of adipic acid.

US patent 4,501,781 assigned to Yoshino Kogyosho Co, Ltd discloses a multilayered preform having for example a three layer structure: an internal layer and an external layer made of PET ; an intermediate passive barrier layer that is made of a blend PET and a xylylene group-containing polyamide (preferably MXD6). The ratio of the xylylene group-containing polyamide in the blend is in the range 5wt% to 50wt%, and preferably in the range 10wt% to 30wt%.

A second known type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0 507 207. Said polymeric compositions generally comprise and oxidizable polymer and a transition metal catalyst. In EP-A-O 301 719, the preferred oxidizable polymers are polyamides, and especially MXD6. In EP-0 507 207, one preferred oxidizable polymer is polybutadiene. In both cases, preferred transition metal catalysts are transition metal salts, an in particular cobalt stearate. Other known metal salts used for making such composition are for example rhodium, manganese, copper, iron.

With multilayered containers having at least one gas barrier layer comprising a polyamide (e.g. MXD6) and a polyester (e.g. PET), very good results can be achieved in terms of shelf life of the packaged products. More especially when the barrier layer comprises a polyamide (e.g. MXD6), polyester (e.g. PET), and a catalyst such as a cobalt salt, the multilayered container can be used for storing oxygen-sensitive products, such as beer, fruit juice or the like. The shelf life of the packaged product widely depends of the amount of polyamide in the container and of the thickness of the barrier layer.

US patent 5,281, 260 assigned to American National Can Company also teaches that the gas barrier property of polyester is enhanced by blending the polyester with xylylene group-containing polyamide and a transition metal catalyst. Preferred embodiments include blends of PET/MXD6/Cobalt. US patent 5,281, 260 further teaches that a high orientation of said blend would also improve the barrier properties. The explanation given is that the high orientation of the blend would increase the surface areas and interface between PET and MXD6 so that there are a greater number of sites at which a reaction or absorption of oxygen takes place.

In return, one major difficulty with the use preforms (monolayer or multilayered preforms) comprising polyamide (homo or copolymer of polyamide), and especially preforms including at least one gas barrier layer (active or passive gas barrier) comprising polyamide (such as MXD6) is the risk of formation of haze in the container wall during and after the blowing process. The haze formation in the container wall is obviously detrimental for all the applications where it is important to have a transparent (clear or coloured) container, - i.e. a container whose wall has no eye-visible whitening or haze, in order to have a better appearance of the packaged product.

In order to minimize the said risk of haze formation in polyamide-containing containers, studies have been mainly focused to date on the optimisation of the polymeric compositions that are used for making the containers. Another route that has been followed was to optimize the blowing process, in order to reduce as much as possible the haze level in the final bottle.

## Objective of the invention

One general objective of the invention is to find a new technical solution for reducing the haze formation in a biaxially stretched container.

A more specific objective of the invention is to find a new technical solution for reducing the haze formation in a container obtained by biaxially stretching in a mould a preform (monolayer or multilayered preform) comprising polyamide (homo or copolymer of polyamide).

## Summary of the invention

The solution of the invention is to use a bag for temporarily storing preforms in a so-called two-stage process, which bag forms a good barrier to moisture and reduces or even substantially prevent the ingress of moisture inside the preform walls (moisture pickup) during the storage period of the preforms.

One first object of the invention is a bag for storing preforms wherein

(a) the said bag is made from a laminate comprising at least one metallic layer,
and/or
(b) the water vapour transmission of the wall of the bag is less than 7 g/m$^2$24h.

Hence, in a first variant (a) of the invention, the bag is made from a laminate comprising at least one metallic layer, which metallic layer forms a barrier to moisture.

In a second variant (b) of the invention, the wall of the bag has a water vapour transmission of less than 7 g/m$^2$. 24h, the bag being not necessarily made from a laminate including one metallic layer (see for example the monolayer polyethylene bag referred as bag #2 in the hereafter detailed description).

In a third preferred variant, the bag is made from a laminate comprising at least one metallic layer and characterized by a water vapour transmission that is less than 7 g/m$^2$.24h.

The word "laminate" used therein encompasses any multilayered flexible sheet or film, comprising at least two bonded layers, and regardless of the process that was used for making the multilayered flexible sheet or film, and especially the process that was used for making the layers and bonding the layers together. The word "laminate" used therein also encompasses any multilayered flexible sheet or film, regardless of the thickness of the multilayered flexible sheet or film.

The wording "metallic layer" used therein means any layer that comprises a metallic component in a amount sufficient for making a layer that has improved barrier to moisture properties as compared for example to a polyethylene layer having substantially the same thickness. Preferably, the metallic layer is essentially or solely made of metal.

Any metals can be used for making the metallic layer, among which aluminium or nickel. Aluminium is the most preferred one.

In one particular embodiment, the bag is made from a laminate that comprises at least one second internal heat-sealable layer. Any heat-sealable material can be used for making the heat-sealable layer. Preferably, the heat-sealable layer comprises or is made of a polyolefin, and more preferably the polyolefin is polyethylene or polypropylene.

In a preferred embodiment, the wall of the bag has a water vapour transmission that is less than 5 $g/m^2.24h$, more preferably that is less than 1 $g/m^2.24h$, and even more preferably less than 0.5 $g/m^2.24h$.

In another preferred embodiment, the bag is a monolayer bag having a wall thickness of at least 80$\mu$m. In particular, the monolayer bag is made from a material comprising a polyolefin. More preferably, the polyolefin is polyethylene.

A second object of the invention is the use of the bag as defined above for temporarily storing plastic preforms, preferably in bulk.

Preferably, the bag is thermo-sealed after introduction of the preforms inside the bag.

Preferably, the preforms comprise polyamide. It can be monolayer polyamide-containing preforms or multilayered preforms comprising at least one layer comprising or made of polyamide.

In a preferred embodiment, the bag is selected in order to obtain a moisture pickup less than 0.2wt%, and more preferably less than 0.15wt%, after at least five days, and more preferably after at least nine days, under storage conditions of 38°C and 85%RH (Relative Humidity).

A third object of the invention is a bag containing plastic preforms, and more especially polyamide-containing preforms, the said bad having the above mentioned technical characteristics. Preferably the bag is hermetically sealed, more preferably by thermo-sealing.

## Short description of the drawings

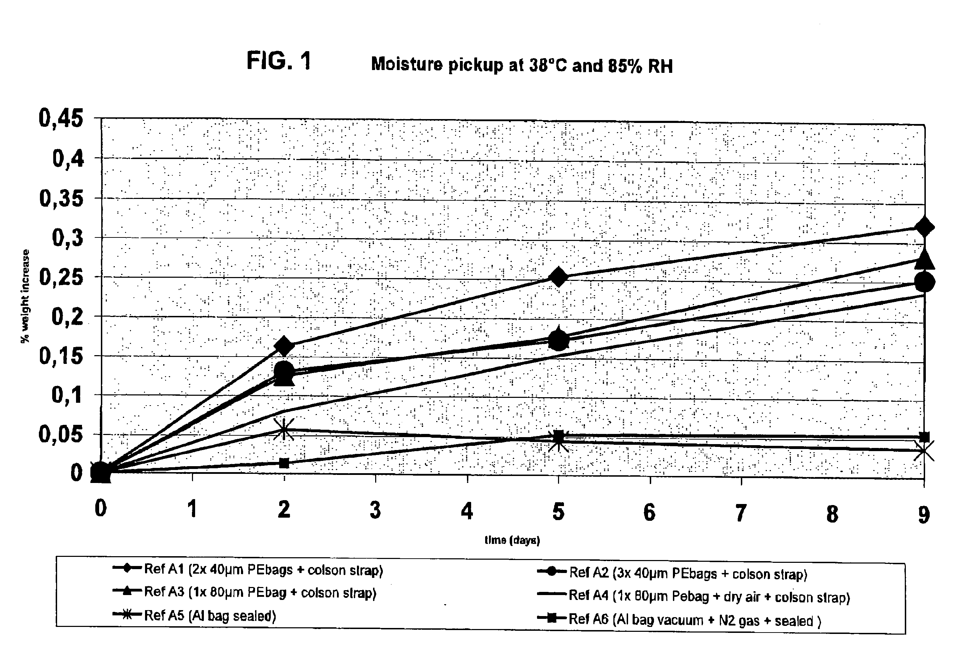

The characteristics and advantages of the invention will appear more clearly on reading the following detailed description which is made by way of non-exhaustive and non-limiting example, and with reference to the accompanying figure 1 that shows several graphs characterizing the evolution of moisture pickup, during nine storage days, for six different preforms-containing packaging (referred A1 to A6) stored under accelerated ageing condition (38°C and 85%RH).

## Detailed description

Different experimental studies haven been performed with different types of preforms stored in different types of bags, with the objectives to measure the moisture pickup of said preforms and the haze formation in bottles obtained by stretch-blow moulding said preforms. These experimental studies and the technical results issued from these studies are now going to be detailed.

## Types of preforms

Two different types of multilayered preforms comprising a polyamide layer have been tested.

Preform A : 8wt% MXD6- Clear

Preform A is clear three-layer preform (weight 28 g) whose wall has inside and outside layers made of PET and an internal gas barrier layer made of MXD6 (commercialized by Mitsubishi Gas Chemical under grade 6007) ; the weight of the MXD6 layer is 8wt% of the total weight of the preform.

Preform B : 8wt% MXD6 - Green

Preform B is a green three-layer preform (weight 28 g) whose wall has inside and outside layers made of PET and an internal gas barrier layer made of MXD6 (commercialized by Mitsubishi Gas Chemical under grade 6007) ; the weight of the MXD6 layer is 8wt% of the total weight of the preform.

Preform A or B was designed for making a 500ml biaxially stretch-blow moulded bottle.

## Types of bags

Three different types of bags have been tested:

Bag #1 (Standard bag) : Monolayer PE bag - Wall thickness: 40$\mu$m

Bag#1 is a flexible monolayer bag made from polyethylene (actually a mixture: 80wt% Low density polyethylene (LDPE) + 20wt% high density polyethylene (HDPE)], and having a wall thickness of 40µm.

Bag#1 was commercialized by German company FORUMLAST FOLIENFABRIK GMBH, under commercial reference "PE-Seitenfaltenhauben Mat-Nr 1024262".

Bag #1 is a standard monolayer PE bag that is commonly used for temporarily storing preforms in a two-stage process, and will be used in the studies as standard test bag for comparing the results obtained with the other bags of the invention.

Bag #2 : Monolayer PE bag - Wall thickness: 80µm

Bag #2 is a flexible monolayer bag made from polyethylene (actually a mixture: 80wt% low density polyethylene (LDPE) + 20wt% high density polyethylene (HDPE)], and having a wall thickness of 80µm.

Bag #2 was commercialized by German company FORUMLAST FOLIENFABRIK GMBH, under commercial reference "PE-Seitenfaltenhauben Mat-Nr 1039764".

Bag #3: Aluminium bag

Bag #3 is flexible bag comprising one aluminium layer and commercialized by French company BERNHARDT under commercial reference "POCHES 500KG-PV077".

Said Bag #3 is more especially a laminate constituted by four layers L1/L2/L3/L4, L1 being the internal layer (inside of the bag), L4 being the external layer (outside of the bag), and layers L2 and L3 being adjacent intermediate layers sandwiched between layers L1 and L4.

Internal layer L1 is a heat-sealable layer made of PE (polyethylene), and having a wall thickness of 12µm.

Intermediate layer L2 is a functional layer acting as a gas barrier layer to oxygen and carbon dioxide. This layer L2 is made of polyamide (PA) and has a thickness of 15µm.

intermediate layer L3 is a thin metallic layer acting as a barrier to moisture. Said metallic layer is made of aluminium and has a thickness of 9µm.

External layer L4 is a PET (polyethylene terephthalate) layer providing improved mechanical properties to the bag, and having a thickness of 80µm.

## Types of packaging

Six different types of packaging using the above-mentioned three bags have been tested:

Packaging #1: Two monolayer PE bags #1- wall thickness: 40 µm
This packaging is made of two bags #1, one of the bag being put inside the other one ; Once the preforms are introduced in bulk inside the internal bag, the bags are closed with a Colson® strap.

Packaging #2: Three monolayer PE bags #1- wall thickness: 40 µm
This packaging is made of three bags #1, one first bag #1 (internal) being put inside one second bag #1 (intermediate bag), both internal and intermediate bags #1 being put inside a third bag #1 (external bag). Once the preforms are introduced in bulk inside the internal bag, the bags are closed with a Colson® strap.

Packaging #3: one monolayer PE bags #2- wall thickness: 80 µm
This packaging is made of one bag #2. Once the preforms are introduced in bulk inside the bag, the bag is closed with a Colson® strap.

Packaging #4: Packaging #3 + dry air
This packaging is made of one bag #2. Once the preforms are introduced in bulk inside the bag, said bag is flushed with dry air (+/-40°C/0%RH) issued from a dryer, and after introduction of the preforms the bag is closed with a Colson® strap.

Packaging #5 : aluminium bag #3
This packaging is made of one aluminium bag #3. Once the preforms are introduced in bulk inside the bag, the bag is hermetically closed by thermo-sealing in a standard way, i.e. the upper parts of the bag are placed between two heated plates and are sealed together by applying heat and pressure, in order to melt and bond together the inside PE layers (for example the heating temperature is set around 160°C and the pressure is set around 40N/cm$^2$).

Packaging #6: Packaging #5 + vacuum + $N_2$
This packaging is made of one aluminium bag #3. Once the preforms are introduced in bulk inside the bag, vacuum is created inside the bag and the inside of the bag is flushed with $N_2$ gas in order to replace air inside the bag by dry nitrogen (O%RH). Then the bag is hermetically closed by thermo-sealing in the same way than packaging # 5

**Water vapour transmission measurements**

Water vapour transmission (WVT) measurements have been made on the following samples:

Sample # 1 : one piece of bag # 1 (monolayer PE bag - 40$\mu$m)
Sample # 2 : two superposed pieces of bag#1 (monolayer PE bag - 40$\mu$m)
Sample # 3 :one piece of bag #2 (monolayer PE bag - 80$\mu$m)
Sample # 4 : one piece of bag #3 (Aluminium bag).

The method used for measuring WVT was based on ASTM E-96 ("Standard Test methods for WATER VAPOR TRANSMISSION OF MATERIALS").
The method based on ASTM E-96 was the following:

- a circular sample is cut out of the bag to be tested with a diameter of 8cm (surface of tested sample approximately equal to 49cm$^2$) ; in case of sample #2, two circular pieces are cut out of the bag and are superposed (without being bonded together) for the test
- vacuum grease is applied on the test cup ;
- the test cup is filled with desiccant (approx.40g);
- the circular sample is pressed on the test cup to make good contact with the vacuum grease ;
- the pressure ring is put on the sample and is tightly fixed with clamps
- the filled test cup is weighted up to a resolution of 0.0001g;
- the test cup with sample is put in the climate cupboard, and the cupboard with the test cup are stored at 38°C and 90% RH;
- the weight of the test cup with the sample in the climate cupboard is measured after 24h (after one hour of acclimatization in the laboratory at 23°C);

The weight increase is measured each day for five sequential days and the WVT (Water vapour transmission) is calculated as follows:

$$WVT = \frac{weight\ increase\ (g) \times 10000cm^2 \times 24h}{total\ time\ of\ storage\ (h) \times surface\ of\ test\ sample\ (cm^2)}$$

The results of the water vapour transmission in (g/m$^2$. 24h) are given in table I. For each sample #1 to #4, the measurement was made twice (sample A and sample B in table I) with two different pieces of the bag.

Table I : water vapour transmission : g/m$^2$.24h

| Sample | Packaging | Sample A | Sample B | Average |
|--------|-----------|----------|----------|---------|
| #1 (1xPE-40$\mu$m) | | 9.18 | 9.6 | 9.4 |
| #2 (2xPE -40 $\mu$m) | #1 | 4.36 | 5.43 | 4.9 |
| #3 (1xPE-80 $\mu$m) | #3 #4 | 4.28 | 5.81 | 5 |
| #4 (1xAl uminium) | #5 #6 | 00.7 | 0.23 | 0.15 |

**First study: moisture pickup and haziness / Ageing: 38°C and 85%RH**

A first ageing study of packaging #1 to #6 filled with preforms A ( clear preforms - 8wt% MXD6) has been made under high temperature and high humidity , namely 38°C and 85%RH. The objective of the study was to measure the moisture pickup of the preforms and the haze formation in bottles stretched-blow moulded from the stored preforms.
In terms of moisture pick-up, one day of storage at 38°C and 85%RH corresponds in practise to approximately 13 days of storage at standard laboratory conditions, that is to say 22°C and approximately 50% RH.
This first study is now going to be described and discussed. **Experimental setup/ procedure for measuring moisture pickup**

The moisture pickup tests have been performed on the following combinations of preforms and types of packaging:

A1 : Packaging #1 filled with preforms A
A2 : Packaging #2 filled with preforms A
A3 : Packaging #3 filled with preforms A
A4 : Packaging #4 filled with preforms A
A5 : Packaging #5 filled with preforms A
A6 : Packaging #6 filled with preforms A

For each packaging combination (A1 t o A6), three packaging are filled with 250 preforms in bulk and are put in three small carton boxes. In each small box, ten test preforms are numbered.

The small boxes are stored in a climate chamber at 38°C and 85%RH. After 2, 5 and 9 days, a small box (a different box for each day) of each type of packaging is taken out and the weight increase of the ten test preforms is measured (each preforms is weighted individually and then put back in the box).

The results of the weight increase (i.e. moisture pickup of the preforms) for the six combinations A1 to A6 are given on the graphs of figure 1.

## Comments on the weight increase (figure 1)

Referring to figure 1, all packaging types except the aluminium bags (combinations A5 and A6) have a weight increase greater than 0.15% after five days of storage (which correspond to approximately 65 days of storage under standard laboratory conditions : 22°C and 50% RH.

There is not much difference in terms of moisture pickup for A5 (Aluminium bag only thermo-sealed) and A6 (aluminium bag under vacuum and previously flushed with Nitrogen).

After nine days, the aluminium bags (A5, A6) exhibit only 0.06wt% moisture pickup.

## Experimental setup/ blowing procedure

The blowing intervals that have been chosen are: day 2 (t2), day 5(t5) and day 9 (t9).

During storage at 38°C and 85%RH, all the preforms with a moisture pick-up (weight increase) greater than 0.15% at the dates of the aforesaid blowing intervals were stretched-blow moulded in a standard way in order to form 500ml bottles.

After nine storage days, all the remaining preforms were blown regardless the amount of moisture pickup.

## 2nd Study : haziness / Ageing: 15°C and 60-75%RH

A second ageing study of packaging #1, #2, #4 and #6, filled with preforms A ( clear preforms - 8wt% MXD6) has been made under real storage conditions, namely : 15°C and 60-75%RH

## Experimental setup/ procedure for measuring moisture pick-up

For each packaging combination (A1, A2, A4, A5, A6), one packaging is filled with 3000 preforms and is put in a small carton octabin (1/3 of standard industrial octabin). The small octabins are stored in a warehouse under real climate conditions (i.e. at roughly 15°C and 60-75%RH) during a period of time of six months.

After six months, all the preforms are stretch-blow moulded in order to form 500ml bottles. The haziness of the bottles is eyes-checked. Results

The results of the two aforesaid studies for A1, A2, A4 and A6 are summarized in table II.

## Third Study : haziness / Ageing: 15°C and 60-75%RH

A third ageing study was made on the following combinations:

A3: Packaging #3 (monolayer PE bag - thickness: 80$\mu$m) filled with 3000 preforms A (clear preforms - 8wt% MXD6) and put in a small carton octabin.
B3: Packaging #3 (monolayer PE bag - thickness: 80$\mu$m) filled with 3000 preforms B (clear preforms - 8wt% MXD6) and put in a small metal cage.

The small carton octabins and metal cages were stored in a warehouse under real climate conditions (i.e. at roughly 15°C and 60-75%RH). For haze control, all the preforms were stretch-blow moulded in order to form 500ml bottles. The haziness of the bottles is eyes-checked.

The results of this third study are summarized in table III.

Table II : Clear Preforms A - 8wt% MXD6 / A1, A2, A4, A5 and A6 /38°C-85%RH

| Reference | Storage | wt% moisture pickup | Remark processing |
|---|---|---|---|
| **A1** ($2 \times 40\mu$m) | t2 | 0.16 | OK (with process adaptation) |
| | $t_5$ | 0.25 | White feet |
| | t9 | 0.32 | Hazy neck |
| | **6months** | **0.21** | **Hazy neck** |
| **A2** (3x40$\mu$m) | t5 | 0.17 | OK (with process adaptation) |
| | t9 | 0.25 | Hazy neck |
| | **6months** | **0.18** | **Slightly hazy neck** |
| **A4** (80$\mu$m/ dry air) | t9 | 0.23 | Hazy neck |
| | **6months** | **0.25** | **Hazy neck** |
| **A5** (Al. Bag) | t9 | 0.04 | OK |
| | **6months** | **0.01** | **OK** |
| **A6** Al. Bag + Vacuum + N2 | t9 | 0.06 | OK |
| | **6months** | **0.01** | **OK** |

Table III : monolayer PE bag - 80$\mu$m / Preforms A and B

| Ref. | Barrier % | Clear / Colour | Packaging | >3 (*) | >4 (*) | >5 (*) | >6 (*) | >7 (*) | >8 (*) | Blowing OK/NOK | Haziness Acceptable ? |
|---|---|---|---|---|---|---|---|---|---|---|---|
| A3 | MXD6 8% | clear | Octabin + 80$\mu$m PE bag | 3,5 | | | | | | OK | Yes |
| A3 | MXD6 8% | clear | Octabin + 80$\mu$m PE bag | | 4.5 | | | | | NOK | NO |
| B3 | MXD6 8% | green | Metal cage + 80$\mu$m PE bag | | | | 6.7 | | | OK | Yes |
| B3 | MXD6 8% | green | Metal cage + 80$\mu$m PE bag | | | | | | 8.7 | OK | Yes |
| (*) Months | | | | | | | | | | | |

Generally at a moisture pickup greater then 0.2wt%, there is eye-visible haze formation in the bottle, and the said haziness cannot be removed by adapting the blowing process parameters. Hence, maximum allowable moisture pickup is set at a threshold value of 0.2wt% and preferably 0.15wt%.

Bottles blown from preforms stored in packaging #1 do not exhibit haze until approximately five storage days at 38°C and 85RH, which corresponds to approximately to two months at standard laboratory storage conditions (22°C and 50%RH). Hence, the maximum shelf life of the clear multilayered preforms stored (standard storage condition) in the packaging #1 (double monolayer PE bags - 40$\mu$m) is approximately 2 months.

In comparison, by using packaging #3 (One monolayer PE bag having a wall thickness of 80$\mu$m and closed with a strap), the shelf life of the preforms (standard storage condition) is improved and is at least 3 months.

Bottles blown from preforms stored in aluminium bags (references A5 and A6) do not exhibit haze after nine storage days at 38°C and 85RH, which corresponds to approximately four months at standard laboratory storage conditions (22°C and 50%RH). Hence, the use of the aluminium bag for storing the multilayered preforms A increases dramatically the shelf life of the said preforms.

The shelf life improvement can be explained as follows. The haze formation in the blown bottles would be due to an increased crystallization of the polyamide layer (MXD6 layer in the examples) when exposed to humidity. With the aluminium bags (A5, A6), a very low moisture pickup (less than 0.06%wt) is achieved. Hence, haze formation due to the crystallization of the polyamide layer is avoided.

Referring to table III, for A3 the maximum shelf life of the preforms was between 3 and 4 months. For B3, the shelf life of the preforms was at least eight months.

Similar studies (moisture pickup and haziness) have been made with multilayered preforms having an $O_2$ scavenging barrier layer comprising polyamide (e.g. 6wt% MXD6) and a small amount of transition metal catalyst. The results were similar to those obtained with multilayered preforms (A and B) having a passive gas barrier layer made solely of polyamide (MXD6).

More generally, the invention can be used for reducing the haze formation in stretch-blow moulded bottles made from preforms generally comprising polyamide (monolayer preform comprising polyamide or multilayer preform comprising at least one layer that comprises or is made of polyamide).

The scope of the invention is not limited to the particular bags (#2 and #3) described above, but encompasses all the bags defined in the claims. In particular, in case of a laminate comprising a metallic layer, the metal is not necessarily aluminium, but can be any other metal that is suitable for forming a barrier to moisture. The laminate can be constituted of at least two bonded layers, one of the layers being the metallic layer. In case of a monolayer bag, one can use any bag having a water vapour transmission less than 7 g/m$^2$.24h. In particular, a flexible monolayer PE bag having a wall thickness greater than 80µm is also suitable. Furthermore, in case of a monolayer bag, the invention is not limited to a monolayer bag made of polyethylene, but polyethylene can be replaced by any other suitable food approved material that can be in contact with preforms.

**Claims**

1.  A bag for storing preforms wherein:

    (a) the bag is made from a laminate comprising at least one metallic layer ;
    and/or
    (b) the water vapour transmission of the wall of the bag is less than 7 g/m$^2$.24h.

2.  The bag of claim 1 wherein the metallic layer comprises or is made of aluminium.

3.  The bag of claim 1 or 2 wherein the laminate comprises at least one second internal heat-sealable layer.

4.  The bag of claim 3 wherein the heat-sealable layer comprises or is made of a polyolefin.

5.  The bag of claim 4 wherein the polyolefin is polyethylene or polypropylene.

6.  The bag of claim 1 which is a monolayer bag having a wall thickness of at least 80µm.

7.  The bag of claim 1 or 6 wherein the bag is a monolayer bag made from a material comprising a polyolefin.

8.  The bag of claim 7 wherein the polyolefin is polyethylene.

9.  The bag of any one of claims 1 to 8, whose wall has a water vapour transmission that is less than 5 g/m$^2$.24h.

10. The bag of claim 9, whose wall has a water vapour transmission that is less than 1 g/m$^2$.24h

11. The bag of claim 10 whose wall has a water vapour transmission that is less than 0.5 g/m$^2$.24h.

12. Use of a bag as defined in any one of claims 1 to 11 for temporarily storing plastic preforms.

13. The use of claim 12 wherein the bag is hermetically closed after introduction of the preforms inside the bag.

14. The use of claim 13 wherein the bag is thermo-sealed.

**15.** The use of any one of claims 12 to 14 wherein the preforms comprise polyamide.

**16.** The use of claim 15 wherein the preforms are multilayered preforms comprising at least one layer comprising or made of polyamide.

**17.** The use of any one of claims 12 to 16 wherein the bag is selected in order to obtain a moisture pickup less than 02wt%, and preferably less than 0.15wt%, after at least five days under storage conditions of 38°C and 85%RH.

**18.** The use of claim 17 wherein the bag is selected in order to obtain a moisture pickup less than 0.2wt%, and preferably less than 0.15wt%, after at least nine days under storage conditions of 38°C and 85%RH.

**19.** A bag containing preforms, wherein the said bag is the one defined in any one of claims 1 to 11.

**20.** The bag and preforms of claims 19 wherein the bag is hermetically closed.

**21.** The bag and preforms of claims 20 wherein the bag is thermo-sealed.

**22.** The bag and preforms of any one of claims 19 to 21 wherein the preforms comprise polyamide.

**23.** The bag and preforms of claim 22 wherein the preforms are multilayered preforms comprising at least one layer comprising or made of polyamide.

**24.** The bag and preforms of any one of claims 19 to 23 wherein the bag is selected in order to obtain a moisture pickup less than 0.2wt%, and preferably less than 0.15wt%, after at least five days under storage conditions of 38°C and 85%RH.

**25.** The bag and preforms of claim 24 wherein the bag is selected in order to obtain a moisture pickup less than 0.2wt%, and preferably less than 0.15wt%, after at least nine days under storage conditions of 38°C and 85%RH.

**FIG. 1** Moisture pickup at 38°C and 85% RH

Legend:
- Ref A1 (2x 40µm PEbags + colson strap)
- Ref A3 (1x 80µm PEbag + colson strap)
- Ref A5 (Al bag sealed)
- Ref A2 (3x 40µm PEbags + colson strap)
- Ref A4 (1x 80µm Pebag + dry air + colson strap)
- Ref A6 (Al bag vacuum + N2 gas + sealed)

X-axis: time (days)
Y-axis: % weight increase

**EP 1 693 312 A1**

<table>
<tr><th colspan="2"></th><th>European Patent</th><th rowspan="2">EUROPEAN SEARCH REPORT</th><th>Application Number</th></tr>
<tr><td colspan="2"></td><td>Office</td><td>EP 05 00 3508</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/009562 A1 (BLOM BAS ET AL) 24 January 2002 (2002-01-24) | 1-11 | B65D65/40 B29C45/17 B32B15/08 |
| Y | * page 1 * <br> * page 2, paragraph 1 * <br> ----- | 12-25 | |
| X | EP 0 691 198 A (AKZO NOBEL N.V) 10 January 1996 (1996-01-10) * the whole document * <br> ----- | 1-5,9-11 | |
| X | US 6 391 411 B1 (DUCKWALL, JR. LOUIS R ET AL) 21 May 2002 (2002-05-21) * column 6; claims * <br> ----- | 1,6-11 | |
| Y | US 3 823 818 A (SHAW C,US) 16 July 1974 (1974-07-16) * column 4, paragraph 1 * <br> ----- | 12-25 | |

**TECHNICAL FIELDS SEARCHED (Int.Cl.7)**

B29C
B32B

The present search report has been drawn up for all claims

| Place of search | Date of completion of the search | Examiner |
|---|---|---|
| The Hague | 27 June 2005 | Ibarrola Torres, O |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                              
& : member of the same patent family, corresponding
   document

EPO FORM 1503 03.82 (P04C01)

**EP 1 693 312 A1**

## ANNEX TO THE EUROPEAN SEARCH REPORT
## ON EUROPEAN PATENT APPLICATION NO.

EP 05 00 3508

27-06-2005

| Patent document cited in search report | | | Publication date | Patent family member(s) | | | Publication date |
|---|---|---|---|---|---|---|---|
| US 2002009562 | A1 | | 24-01-2002 | AT | 247589 | T | 15-09-2003 |
| | | | | AU | 3484700 | A | 21-09-2000 |
| | | | | CN | 1343176 | A | 03-04-2002 |
| | | | | DE | 60004644 | D1 | 25-09-2003 |
| | | | | DE | 60004644 | T2 | 17-06-2004 |
| | | | | EP | 1161385 | A1 | 12-12-2001 |
| | | | | ES | 2204540 | T3 | 01-05-2004 |
| | | | | JP | 2002538054 | A | 12-11-2002 |
| | | | | WO | 0051913 | A1 | 08-09-2000 |
| EP 0691198 | A | | 10-01-1996 | DE | 69501132 | D1 | 15-01-1998 |
| | | | | DE | 69501132 | T2 | 14-05-1998 |
| | | | | EP | 0691198 | A1 | 10-01-1996 |
| | | | | JP | 8072957 | A | 19-03-1996 |
| US 6391411 | B1 | | 21-05-2002 | NONE | | | |
| US 3823818 | A | | 16-07-1974 | NONE | | | |